# EUROPEAN PATENT APPLICATION

(11) **EP 2 193 774 A1**
(43) Date of publication of application: **09.06.2010**
(21) Application number: 08752127.4
(22) Date of filing: 25.04.2008
(51) Int. Cl.: A61H 3/00, A61H 3/04

(54) **WALKING AUXILIARY EQUIPMENT**

(30) Priority: 02.10.2007 JP 2007258994
(71) Applicant: Tokyo University of Science, Educational Foundation, Tokyo 162-8601 (JP)
(72) Inventor: KOBAYASHI, Hiroshi, Tokyo 162-8601 (JP); KARAWATARI, Takeo, Tokyo 162-8601 (JP); IRIE, Kazutaka, Ogoori-shi Fukuoka 838-0106 (JP); HIRAMATSU, Kazuaki, Tokyo 101-0021 (JP); SATO, Yutaka, Tokyo 101-0021 (JP)
(74) Representative: Rüger, Barthelt & Abel Patentanwälte
(86) International application number: PCT/JP2008/058084
(87) International publication number: WO 2009/044568

(57) **Abstract**

Walking auxiliary equipment 10 includes a walking unit 12 and a bogie 14. The walking unit 12 has a lumber frame 16 put onto the lumber region of a user, a below-knee frame 34 put onto the leg of a user, an above-knee frame 26 for coupling the lumber frame 16 to the below-knee frame 34, through a first joint K1 and a second joint K2, and an assistance force imparting device 102. The assistance force imparting device 102 includes a first actuator 104 for generating assistance force to flex the first joint K1, a second actuator 106 for generating assistance force to flex the second joint K2, a third actuator 108 for generating assistance force to extend the second joint K2, and a fourth actuator 110 for generating assistance force to extend the first joint K1.

## Description

### BACKGROUND OF THE INVENTION

### Field of the Invention

The present invention relates to walking auxiliary equipment to acquire or regain walking ability in persons with poor mobility, having damage, such as complete paralysis where the nerve pathways are diagnosed as completely severed (spinal cord injury, cervical spine injury, spina bifida), partial paralysis where un-severed pathways remain (cerebral palsy, spinal cord injury, cervical spine injury, spina bifida), and the like.

### Description of the Related Art

Persons with poor mobility, such as due to cerebral palsy find it very difficult to maintain a standing posture and acquire a normal gait pattern in cases of strong spasticity, accompanying involuntary muscle movements, poor muscle tone and the like. Furthermore, essentially no movement of the lower limbs can be made when signal transmission to the lower limb motor nerves is interrupted when there is complete paralysis of the lower limb function, such as due to spinal cord injury, spina bifida, or the like, and a wheelchair becomes the means for getting around. Prolonged wheelchair use causes disuse of the lower limb function such as muscular atrophy and articular contracture. In addition decreased functioning of the circulatory system and the digestive system leads to a decrease in QOL and ADL. Therefore it is important in modem rehabilitation to perform walking training adopting a standing posture, while reducing the burden on a person with poor mobility.

The following is an example thereof (see, for example, "The David Hart Clinic" catalogue, published January 2004).

There are devices (see FIG. 21) that apply walking assistance force by fixing one end of a piece of elastic to the frame of a bogie, and fixing the other end in the vicinity of the ankle of a user, there are long leg braces (see FIG. 22), there are suspension invalidity aids (see FIG. 23), and the like.

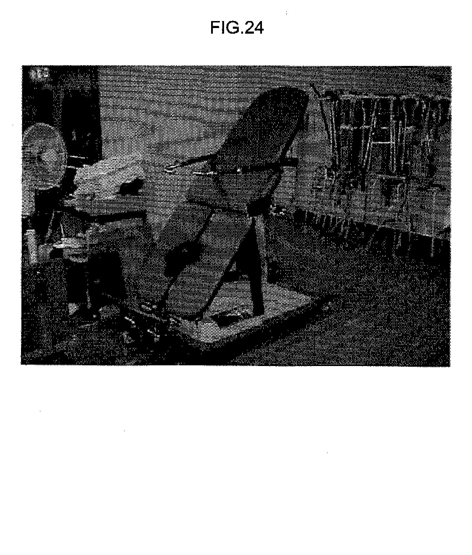

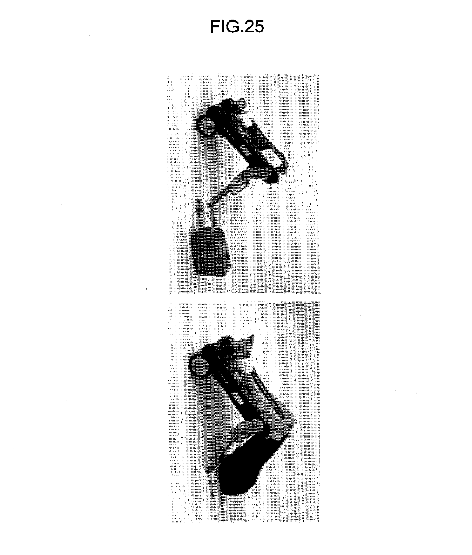

When the four limbs cannot be moved due to nervous or cerebral failure, joints become contracted and the range of motion becomes narrow, eventually leading to loss of movement. Therefore, it is necessary to adopt a standing posture and activate the actions of the circulatory system and the digestive system. As such training devices there are passive exercise training devices, such as electrical slanting tables (see FIG. 24), passive exercise training devices for the lower limb (see FIG. 25), and the like.

Conventional devices mainly prevent contracture, attain range of motion, and practice a standing posture.

For juveniles with poor mobility, such as due to cerebral palsy or the like, in order to acquire walking there is walking training nursing that employs walking training equipment, in which the trunk is supported by a guardian or trainer from behind. However, sufficient effect is not obtained for persons with impeded continuity of step due to femoral region in-swing, or the like, such as scissor leg sufferers and the like. This point is similar to walking training for patients with cerebral infarction and the like. Although, particularly in the case of adults, there is advocacy in the field of rehabilitation medicine for the necessity for walking training from the acute stage, in many cases it is difficult to take up a standing posture prior to walking training, and there is strong demand for development of a walker that can reliably prevent tipping over.

After birth, humans become capable of standing on two feet and walking by controlling muscles in the four limbs with instructions from the brain, and repeated training of walking movements.

Once bipedal walking has been attained, then when walking is commenced, even if signals of nerves relating to walking do not reach the brain, walking movement is automatically corrected, with a walking speed instruction output for each step at a time, by what is generally referred to as reflexes, and walking can be made without burden on the brain.

In the case of juveniles with poor mobility, such as due to cerebral palsy or the like, since control of muscle movement is not performed by motor nerves in a similar manner to healthy juveniles, often involuntary tone occurs with strong local muscle activity induced. Consequently, it is extremely difficult to achieve a correct standing posture and execute correct walking movement, even when wearing conventional walking auxiliary equipment and training devices. In addition, walking has been considered impossible when nerve transmission to the lower limbs is completely severed after birth due to spinal cord injury and cervical spine injury.

### SUMMARY OF THE INVENTION

The present invention is made in consideration of the above circumstances and an object thereof is to provide a walking auxiliary equipment that can solve the above issues.

A walking auxiliary equipment of a first aspect of the present invention imprints walking patterns to nerve ganglions of a person with poor mobility, the walking auxiliary equipment including: a walking aid unit that is put onto at least the leg of a person with poor mobility; and a drive-assistance device, attached to the walking aid unit and assisting walking movement of a person with poor mobility.

According to the first aspect, walking of a person with poor mobility becomes executable by reflex in a similar manner to walking of a healthy person.

The walking auxiliary equipment of the first aspect may have the drive-assistance device present outside a field of vision of a wearer.

According to the walking auxiliary equipment of the above described configuration, the person with poor mobility caused to sense movements as being of their own volition, and not those assisted by another person.

In the first aspect of the present invention, the aid-assistance device may impart reaction force to a heel of a person with poor mobility when a wearer is progressing forward.

According to the walking auxiliary equipment of the above described configuration, a person with poor mobility can be made to reliably kick the ground surface with the sole of their feet, thereby generating lots of myoelectric signals, and feeding back to the nerve bundles.

A walking auxiliary equipment of a second aspect of the present invention, includes: a trunk section that is put onto the trunk of a user; a lower leg section that is put onto a lower leg of a user; a coupling section, supported by the trunk section via a first joint section corresponding to a hip joint so as to be capable of swinging in a walking direction and a backwards direction, and supporting the lower leg section via a second joint section corresponding to a knee joint so as to be capable of swinging in a walking direction and backwards direction; a first actuator that generates assistance force to cause the coupling section to swing towards the walking direction side about the first joint section; a second actuator that generates assistance force to cause the lower leg section to swing towards the backwards direction about the second joint section; and a third actuator that generates assistance force to cause the lower leg section to swing about the second joint section towards the walking direction side.

In the walking auxiliary equipment of the second aspect, the action to raise the thigh region of a user (thigh raising) is assisted by the coupling section swinging toward the walking direction side due to assistance force generated by the first actuator. The action to flex the knee of a user is also assisted by the lower leg section swinging towards backwards direction due to assistance force generated by the second actuator. Hence, walking movement, of thigh raising while the knee of a user is flexed, is assisted by first actuator and the second actuator generating assistance force.

Furthermore, the action to extend the knee of a user is assisted by the lower leg section swinging towards the walking direction due to the assistance force generated by the third actuator. As a result, after thigh raising with a flexed knee of a user, the walking movement is assisted to make ground contact from the heel with the knee extended.

Thereby, the weight of a user is supported by the leg in a flat-foot ground contact state, enabling the walking stability of a user to be increased.

The walking auxiliary equipment of the second aspect of the present invention can be configured with the third actuator provided extending in an up-down direction at the walking direction side of the lower leg section, an upper end portion of the third actuator supported at the coupling section, a lower end portion of the third actuator supported at the lower leg section, and the third actuator generating force in a contracting direction while contracting.

In the walking auxiliary equipment configured as described above, the third actuator is provided extending in an up-down direction at the walking direction side of the lower leg section, an upper end portion is supported at the coupling section, a lower end portion is supported at the lower leg section, and the third actuator generates force in a contracting direction while contracting. Due thereto, the lower leg section swings towards the walking direction about the second joint section, and action to extend the knee of a user is assisted.

In the walking auxiliary equipment of the second aspect of the present invention, a coupling plate can be provided, supported at the trunk section so as to be capable of swinging in the walking direction and the backwards direction, disposed along the coupling section with the coupling section fixed to an intermediate portion of the coupling plate, a lower end portion of the first actuator and an upper end portion of the third actuator supported at a distal end portion of the coupling plate, and an upper end portion of the second actuator supported at the proximal end of the coupling plate.

According to the walking auxiliary equipment of the above described configuration, plural components can be fixed to or supported at a single coupling plate, and the number of components can be reduced to give a simple structure.

The walking auxiliary equipment of the second aspect of the present invention can be provided with a fourth actuator that generates assistance force to cause the coupling section to swing towards the backwards direction about the first joint section in a state in which the third actuator has generated assistance force.

In the walking auxiliary equipment of the above described configuration, when in a state in which the third actuator has generated assistance force, the fourth actuator generates assistance force and action to pull the thigh towards the backwards direction without flexing the knee of a user, namely operation to kick the ground with an upright leg, is assisted by this assistance force swinging the coupling section towards the backwards direction about the first joint section.

Consequently, walking stability of a user can be raised even more.

A walking auxiliary equipment of a third aspect of the present invention further has: the first actuator provided extending along an up-down direction at the walking direction side of the coupling section, an upper end portion of the first actuator supported at the trunk section, a lower end portion of the first actuator is supported at the coupling section, and the first actuator generating force in a contracting direction while contracting; and the second actuator and the fourth actuator provided extending along up-down directions at the backwards direction side of the coupling section, upper end portions of the second actuator and the fourth actuator supported at the trunk section, lower end portions of the second actuator and the fourth actuator supported at the lower leg section and generating force toward a contracting direction while contracting.

In the walking auxiliary equipment of the third aspect, the first actuator is provided extending along an up-down direction at the walking direction side of the coupling section, an upper end portion of the first actuator supported at the trunk section, a lower end portion of the first actuator is supported at the coupling section, and the first actuator generates force in a contracting direction while contracting. Thereby, the coupling section rotates in the walking direction about the first joint section, and leg raising action of a user is assisted.

The second actuator is provided extending along an up-down direction at the backwards direction side of the coupling section, an upper end portion thereof is supported at the trunk section, and a lower end portion is supported at the lower leg section, and this fourth actuator generates force toward a contracting direction while contracting. The lower leg section thereby swings towards the backwards direction about the second joint section, and action to flex the knee of a user is assisted.

However, the fourth actuator is provided extending along an up-down direction at the backwards direction side of the coupling section, an upper end portion thereof is supported at the trunk section, and a lower end portion is supported at the lower leg section, and this fourth actuator generates force toward a contracting direction while contracting with the third actuator in an assistance force generated state. The coupling section thereby swings towards the backwards direction about the first joint section, and action to kick the ground with an upright leg of a user is assisted.

In the walking auxiliary equipment of the third aspect of the present invention, the length of extension and retraction of the second actuator can be longer than the length of extension and retraction of the fourth actuator.

In the walking auxiliary equipment of the above described walking auxiliary equipment, the range of movement of action to flex the knee of a user can be extended by making the length of extension and retraction of the second actuator longer than the length of extension and retraction of the fourth actuator.

In the walking auxiliary equipment of the third exemplary embodiment of the present invention, the first actuator, the second actuator, the third actuator, and the fourth actuator can be pneumatic actuators generating force in the contracting direction while contracting due to air being internally supplied.

In the walking auxiliary equipment of the above described configuration, functionality to generate assistance force can be obtained with a simple structure by the first actuator, the second actuator, the third actuator, and the fourth actuator being pneumatic actuators generating force in the contracting direction while contracting due to air being internally supplied.

The walking auxiliary equipment of the third aspect of the present invention can have a manual switch to manually switch ON and OFF the contracting actuation of the first actuator, the second actuator, the third actuator, and the fourth actuator.

In the walking auxiliary equipment of the above described configuration, the contracting actuation of the first actuator, the second actuator, the third actuator, and the fourth actuator is manually switched ON and OFF by the manual switch. Consequently, generation of assistance force to match the state of a user is enabled.

In the walking auxiliary equipment of the third aspect of the present invention, the manual switch can include: a first switch that switches ON and OFF contracting actuation in the first actuator and the second actuator on a first side of the left or the right, together with contracting actuation in the third actuator and the fourth actuator on the other side of the left and right; and a second switch that switches ON and OFF contracting actuation together in the first actuator and the second actuator on the other side of the left or the right, together with contracting actuation in the third actuator and the fourth actuator on the first side.

In the walking auxiliary equipment of the above described configuration, assistance can be made to the action to kick the ground with the leg on the other side with the knee in an extended state, while flexing the knee of the leg on the first side, by the first switch that switches ON and OFF contracting actuation in the first actuator and the second actuator on a first side of the left or the right, together with contracting actuation in the third actuator and the fourth actuator on the other side of the left and right. Furthermore, the raised leg on the first side can be made to have heel contact with the ground by switching on the contracting actuation of the third actuator on the first side by switching OFF the first switch and switching ON the second switch.

This enables action to stride out forward with the leg of a user on the first side to be made appropriate to the condition of a user.

However, by using the second switch to switch ON contracting actuation together in the first actuator and the second actuator on the other side, together with contracting actuation in the third actuator and the fourth actuator on the first side, action to raise the leg on the other side of a user while the knee is flexed, and action to kick the ground with the leg on the first side in a knee extended state, is assisted. Furthermore, the contracting actuation of the third actuator on the other side is switched ON by switching the second switch OFF while also switching the first switch ON, and the leg on the other side can be lowered such that heel contact is made.

This enables action to stride out forward with the leg of a user on the other side to be made appropriate to the condition of a user.

The walking auxiliary equipment of the third aspect of the present invention can have a third switch that switches ON and OFF contracting actuation in the third actuator and the fourth actuator on both the left and right sides together.

In the walking auxiliary equipment of the above described configuration, by switching ON the contracting actuation of the third actuators and the fourth actuators on both the left and right sides using the third switch, assistance force extending the first joint section and the second joint section can be generated, thereby assisting the standing action of a user.

In the walking auxiliary equipment of the third aspect of the present invention, a control unit may be included that repeatedly executes in sequence: a first step of switching ON the contracting actuation of the first actuator and the second actuator on a first side of the left or the right and switching OFF the contracting actuation in the third actuator and the fourth actuator of the first side, together with switching OFF the contracting actuation of the first actuator and the second actuator on the other side of the left or the right and switching ON the contracting actuation in the third actuator and the fourth actuator of the other side; and a second step of switching OFF the contracting actuation of the first actuator and the second actuator on the first side and switching ON the contracting actuation in the third actuator and the fourth actuator of the first side, together with switching ON the contracting actuation of the first actuator and the second actuator on the other side and switching OFF the contracting actuation in the third actuator and the fourth actuator of the other side.

In the walking auxiliary equipment of the above described configuration, the control unit repeatedly executes the first step and the second step in sequence. First, in the first step, contracting actuation of the first actuator and the second actuator in the first side of either the left or the right side is switched ON together with the contracting actuation of the third actuator and the fourth actuator in the other side, and the other actuators are switched OFF.

Next, at the second step, contracting actuation of the first actuator and the second actuator in the other side of either the left or the right side is switched ON together with the contracting actuation of the third actuator and the fourth actuator in the first side, and the other actuators are switched OFF.

By executing the above first step and second step in sequence, the leg on the left or the right side of a user is raised with the knee flexed, and the leg on the opposite side kicks the ground surface in a knee extended state, and furthermore operation can be performed such that then the raised leg is lowered while extending the knee so as to make heel contact.

As explained above, the present invention can provide a walking auxiliary equipment that can solve the existing problems.

### BRIEF DESCRIPTION OF THE DRAWINGS

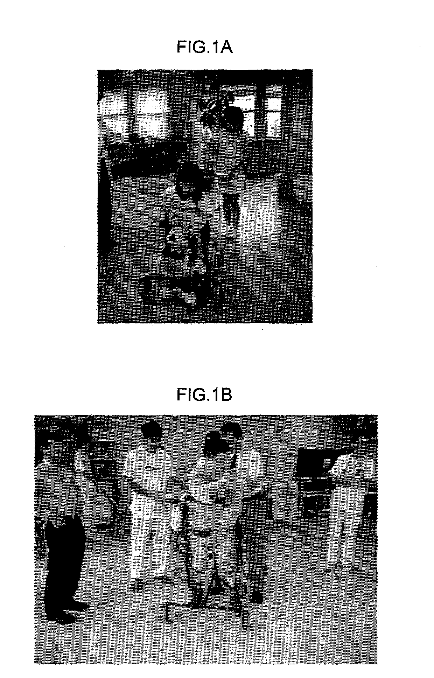

FIG. 1A is a figure showing a walking auxiliary equipment according to an exemplary embodiment of the present invention in a state of use.
FIG. 1B is a figure showing a walking auxiliary equipment according to an exemplary embodiment of the present invention in a state of use.

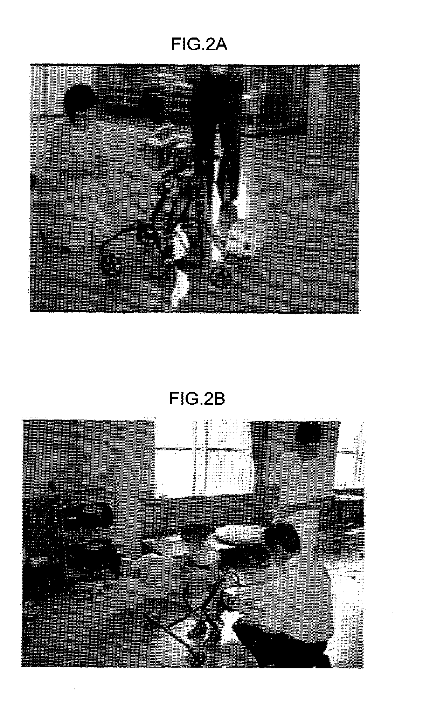

FIG 2A is a figure showing a walking auxiliary equipment according to an exemplary embodiment of the present invention in a state of use.
FIG. 2B is a figure showing a walking auxiliary equipment according to an exemplary embodiment of the present invention in a state of use.

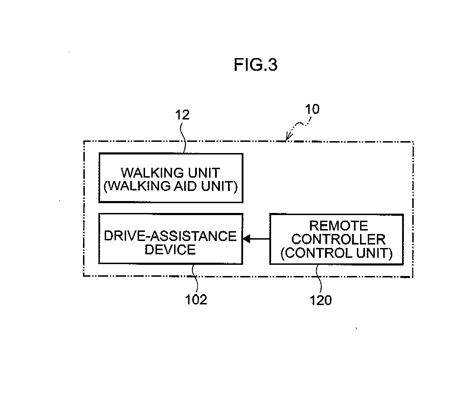

FIG 3 is block diagram showing a schematic configuration of a walking auxiliary equipment according to an exemplary embodiment of the present invention.

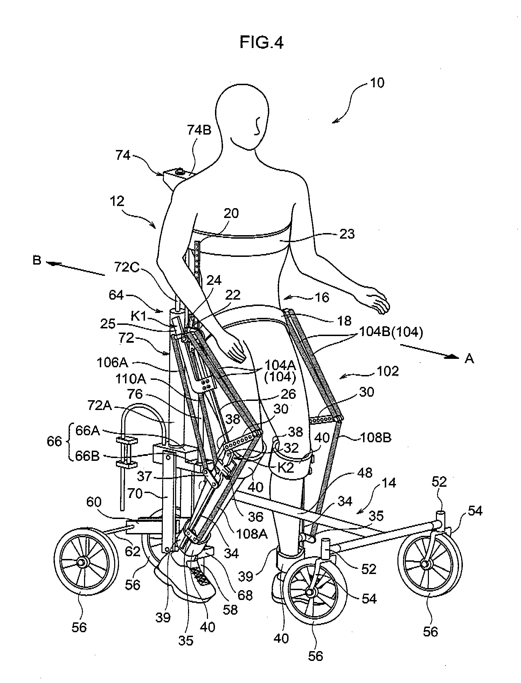

FIG. 4 is a perspective view showing a walking auxiliary equipment according to a first exemplary embodiment in a state of use;

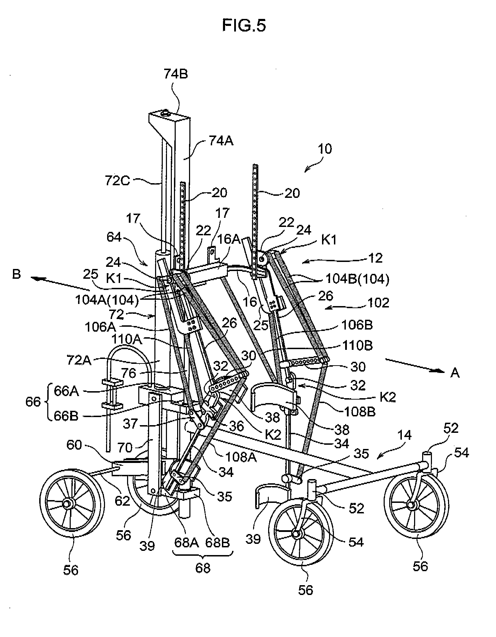

FIG. 5 is a perspective view showing a walking auxiliary equipment according to a first exemplary embodiment in a state of preparation before putting on;

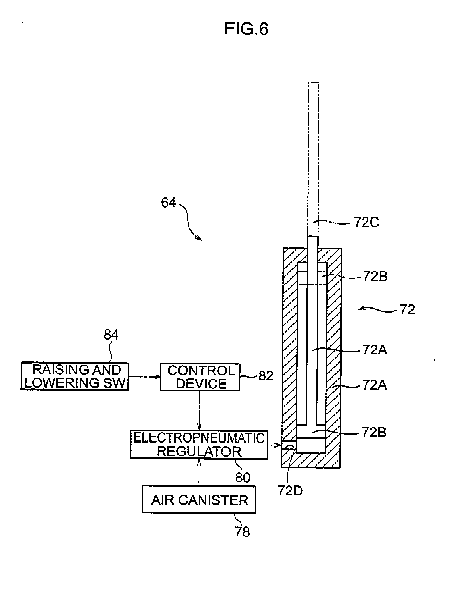

FIG. 6 is a schematic diagram showing relevant parts of an automatic lift device provided to a walking auxiliary equipment according to the first exemplary embodiment of the present invention.

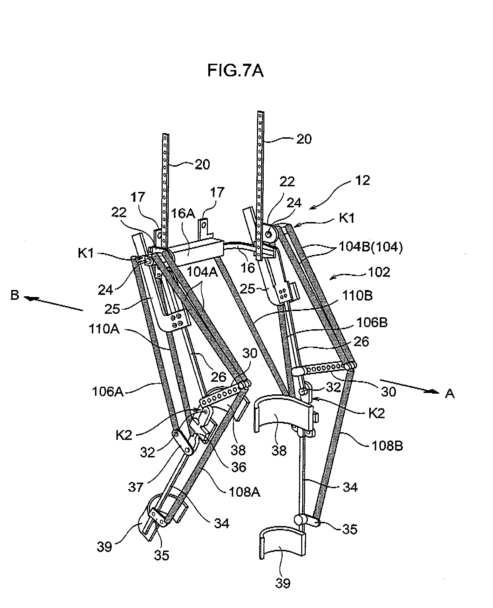

FIG. 7A is a perspective view showing a walking unit for provision to the first exemplary embodiment of the present invention.

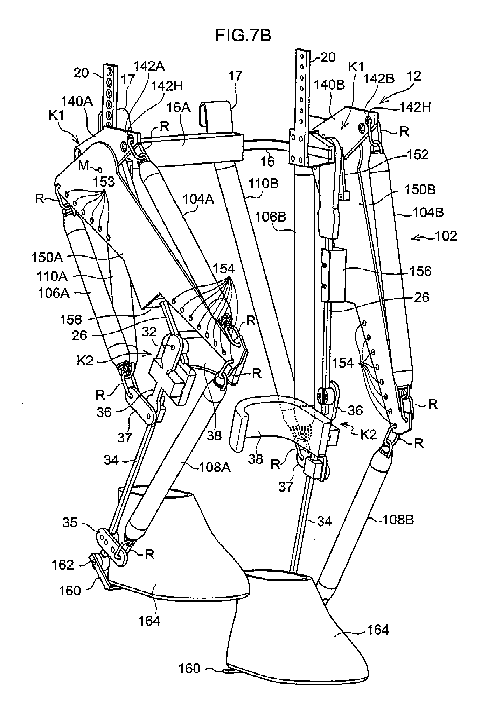

FIG. 7B is a perspective view showing an exemplary modification of a walking unit for provision to the first exemplary embodiment of the present invention.

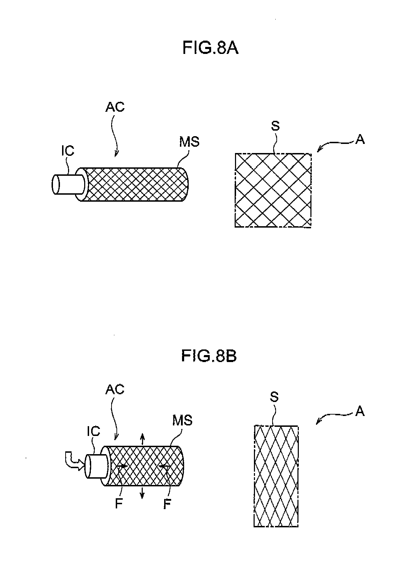

FIG. 8A is diagram showing the outline of an actuator for provision to a walking auxiliary equipment according to the first exemplary embodiment of the present invention.
FIG 8B is diagram showing the outline of an actuator for provision to a walking auxiliary equipment according to the first exemplary embodiment of the present invention.

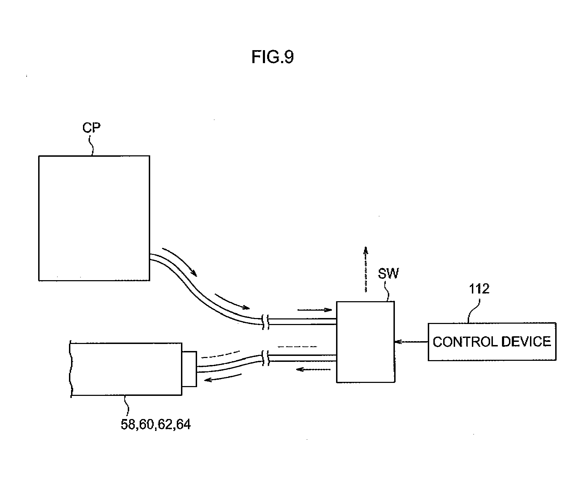

FIG 9 is a diagram showing the outline of air supply and venting of an actuator for provision to a walking auxiliary equipment according to the first exemplary embodiment.

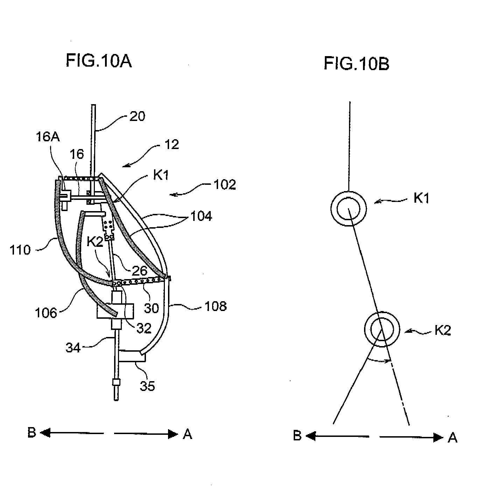

FIG. 10A is a lateral view showing a walking unit for provision to a walking auxiliary equipment according to the first exemplary embodiment of the present invention.
FIG. 10B is a schematic diagram schematically showing movement in the front-rear direction of a walking unit for provision to a walking auxiliary equipment according to the first exemplary embodiment of the present invention.

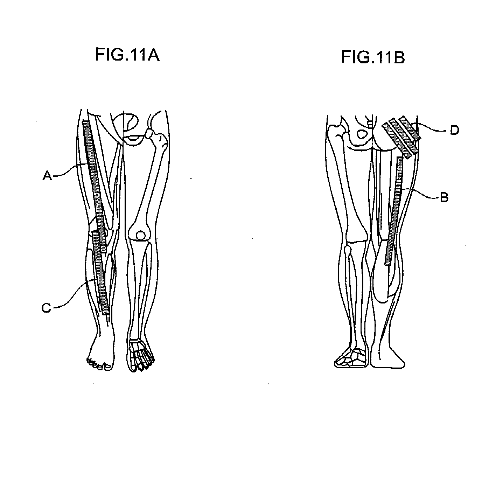

FIG. 11A is an explanatory diagram showing the muscles of a human body corresponding to the first and the second actuators.
FIG. 11B is an explanatory diagram showing the muscles of a human body corresponding to the third and the fourth actuators.

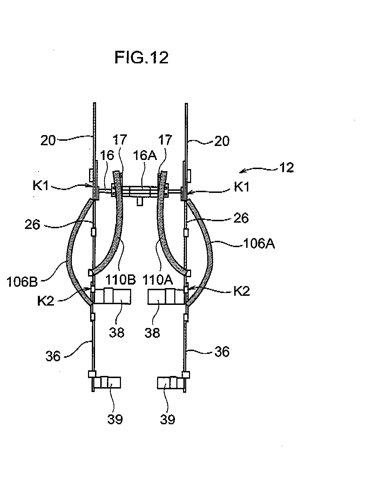

FIG. 12 is a rear view showing a walking unit for provision to a walking auxiliary equipment of the first exemplary embodiment of the present invention.

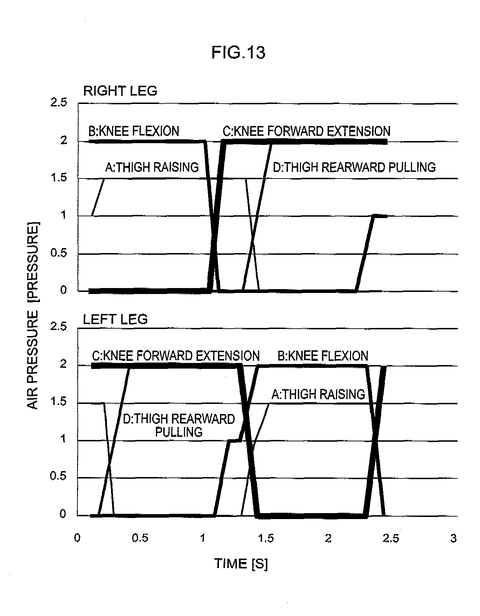

FIG. 13 is a timing chart for explaining actuation of a assistance force imparting device configuring a walking auxiliary equipment according to the first exemplary embodiment of the present invention.

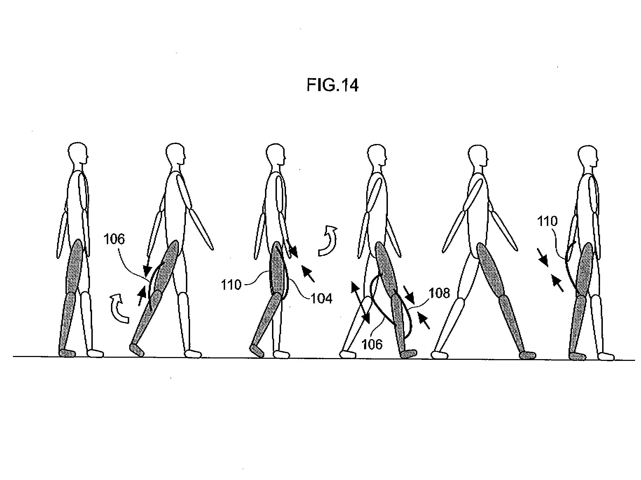

FIG. 14 is a lateral view showing walking movement of a user of a walking auxiliary equipment according to a first exemplary embodiment of the present invention.

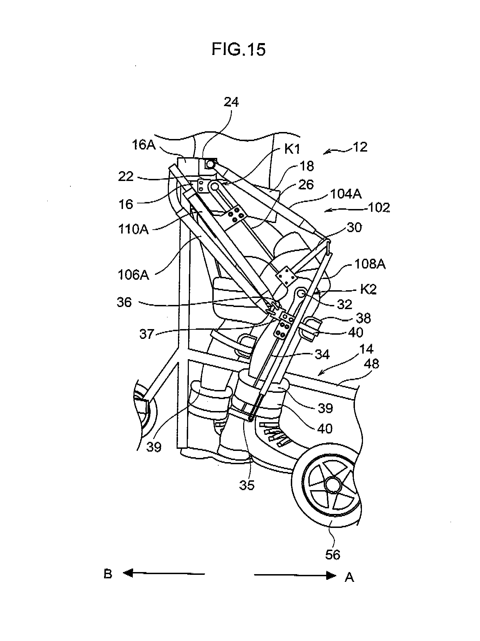

FIG. 15 is a lateral view showing a state of use of a walking auxiliary equipment according to the first exemplary embodiment of the present invention.

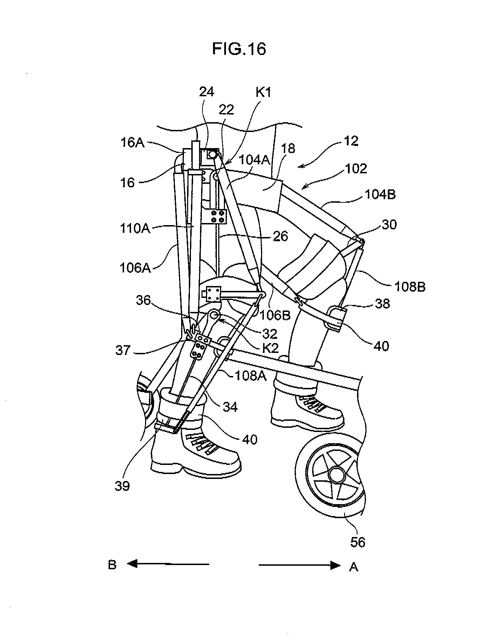

FIG 16 is a lateral view showing a state of use of the walking auxiliary equipment according to the first exemplary embodiment of the present invention.

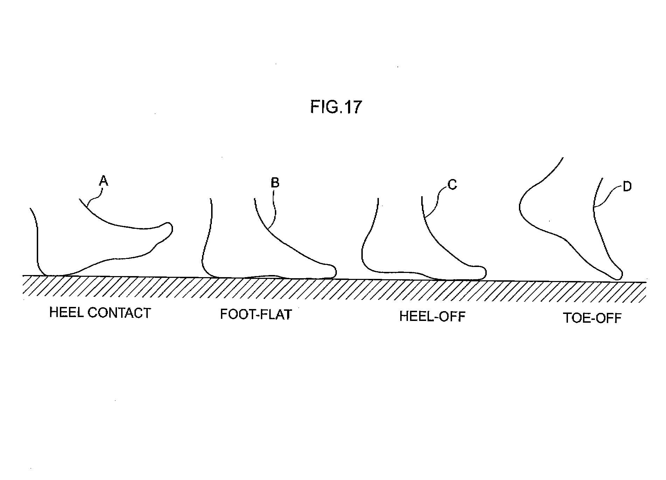

FIG 17 is an explanatory diagram for explaining normal walking movement.

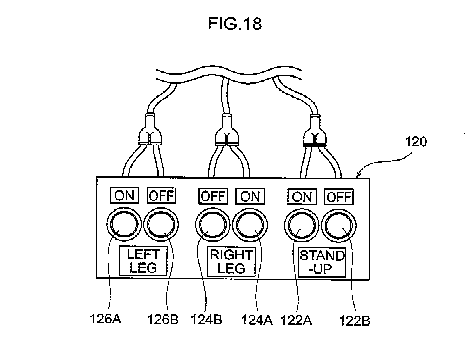

FIG 18 is a diagram showing a manual switch for provision to a walking auxiliary equipment according to a second exemplary embodiment of the present invention.

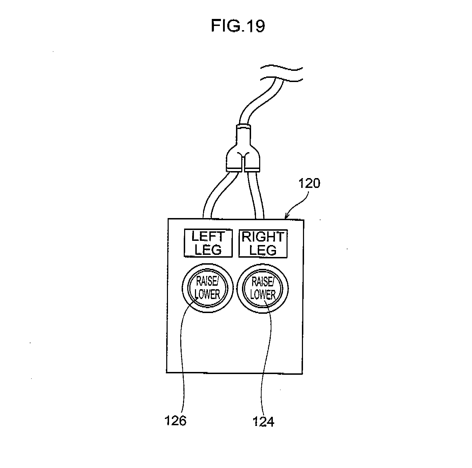

FIG 19 is a diagram showing a manual switch for provision to a walking auxiliary equipment according to the second exemplary embodiment of the present invention;

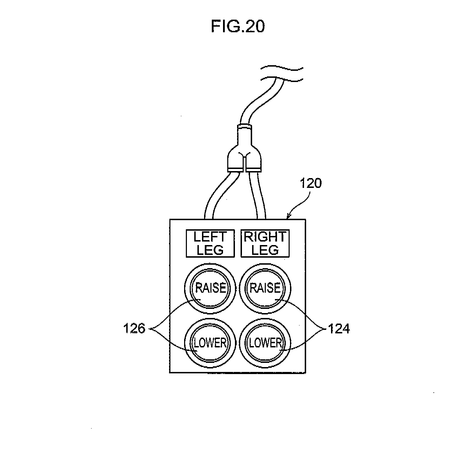

FIG 20 is a diagram showing a manual switch for provision to a walking auxiliary equipment according to the second exemplary embodiment of the present invention;

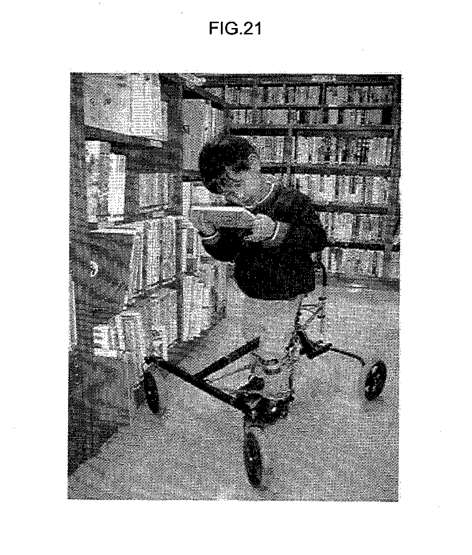

FIG. 21 is a diagram of a conventional walking auxiliary equipment;

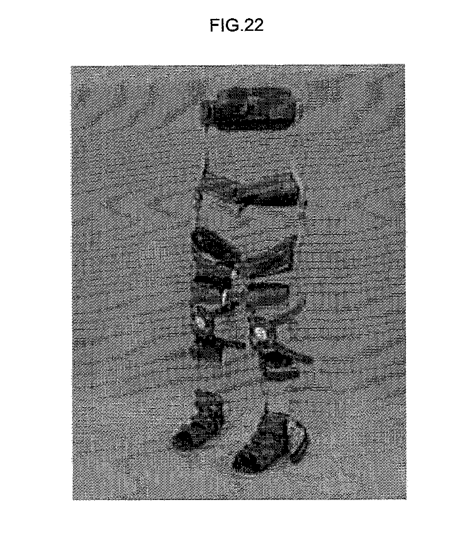

FIG 22 is a diagram of a conventional walking auxiliary equipment;

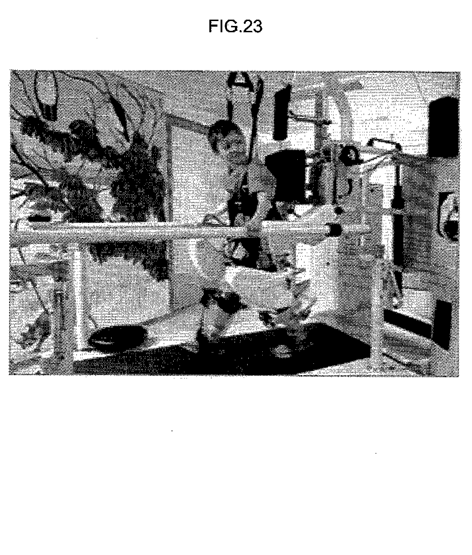

FIG 23 is a diagram of a conventional walking auxiliary equipment;
FIG 24 is a diagram of a conventional walking auxiliary equipment; and
FIG. 25 is a diagram of a conventional walking auxiliary equipment.

### DESCRIPTION OF THE PREFERRED EMBODIMENTS

Explanation follows regarding walking auxiliary equipment 10 according to an exemplary embodiment of the present invention, based on FIG. 1 to FIG. 18.

As shown in FIG. 1 to FIG. 3, the walking auxiliary equipment 10 has a walking unit (walking aid unit) 12 to which an drive-assistance device 102 is attached (see also FIG. 4), and control thereof is performed by a remote controller (manual switch, described below) 120.

The walking auxiliary equipment 10 according to the present exemplary embodiment has the drive-assistance device 102 attached to the walking unit 12 such that a user (wearer) is not conscious thereof (out of the field of vision), such that walking training is performed although a user has a sensation of wearing the walking unit 12.

In this training, order to give as much freedom as possible to a user, a forward driving force needs to be imparted when a user wants to go forward. This is important in order to make a connection between the intention of a user to walk, and the nerves that actually perform walking. The present equipment can impart to muscles the movement of each step at a time, and the electrical signal generated from the muscle originates in peripheral nerves and passes through a number of nerve pairs (bundle), and is finally transmitted to the larger nerves of the spine. By repeating this training, rudimentary walking patterns transmitted with reflexes of the nerve pairs are imprinted.

In cases of pamplegia and cases of hypoparalysis, by such iterative training with correct walking exercise, gradually abnormal muscle tone and involuntary movements can be alleviated, and it has already been confirmed that as a result autonomous walking movement can become attainable. If such a state is arrived at, then similar walking movement to that of a health person becomes executable by reflex, and the need to think in order to execute walking movement becomes unnecessary.

Explanation follows regarding the walking auxiliary equipment 10 according to a first exemplary embodiment of the present invention. Note that for case of explanation, the walking direction of a person undergoing walking training shown by the arrow A is defined as the front side, the backwards direction of a person undergoing walking training shown by arrow B is defined as the rear side, and up, down, left and right directions are based on the directions as viewed when facing in the walking direction.

FIG. 4 is a perspective view of the walking auxiliary equipment 10 in a state of being put onto a person undergoing walking training, FIG. 5 is a perspective view of the walking auxiliary equipment 10 in a state before putting on. As shown in these figures, the walking auxiliary equipment 10 is configured with the walking unit 12 that is put onto a human body supported by a bogie 14.

The walking unit 12 is equipped with a lumber frame 16, formed as a trunk (lumber region) portion in substantially a semi-circular shape (U-shape) in plan view, opening to the front. The lumber frame 16 is attached to the bogie 14 via an automatic lifting device 64, described below. A lumber contact plate 16A is attached to the front face of a left-right direction central portion of the lumber frame 16, with the lumber contact plate 16A making contact with the lumber region on the trunk of a human body positioned inside the lumber frame 16. A bracket 17 is fixed to each of both the left and right ends of the lumber contact plate 16A.

As shown in FIG 4, the lumber frame 16 is put onto the lumber region of the trunk of a human body by means of a waist belt 18 connected to the respective ends of both the left and right ends of the lumber frame 16, with the rear portion of the waist belt 18 wrapped around so as to support the buttocks of a human body from below. The lumber frame 16 is thereby configured to transmit (support) the weight of a wearer to (on) the bogie 14. Note that illustration of the waist belt 18 is omitted from drawings except for FIG. 4.

Furthermore, as shown in FIG. 5, the bottom ends of a left-right pair of upright frames 20 are fixed to both the left and right ends of the lumber frame 16, the upright frames 20 each having a length substantially in an up-down direction. The left-right upright frames 20 each have a top end of a length sufficient to reach up to the chest region of a wearer. Brackets 22 are fixed to the bottom end side of each of the upright frames 20 (above the lumber frame 16). As shown in FIG 4, each top end of the left-right upright frames 20 can be put onto the chest region of a human body via a common chest belt 23. Note that illustration of the chest belt 23 is omitted from drawings except for FIG. 4.

Furthermore, the top ends of above-knee frames 26 with length directions substantially along an up-down direction, serving as coupling portions, are coupled to the lumber frame 16 in the vicinity of the opening ends of the lumber frame 16, further forward than the joint portion to the upright frames 20. Connection is made via hinge shafts 24, each having an axial line that runs substantially along the left-right direction, such that the above-knee frames 26 are capable of swinging about the hinge shafts 24. Intermediate portions of the above-knee frames 26 are fixed to brackets 25. The brackets 25 are of substantially L-shape, with one end side of each of the brackets 25 attached to the lumber frame 16 so as to be capable of swinging, and the other end side fixed to the intermediate portion of the above-knee frame 26. A first joint K1, corresponding to the hip joint, is configured by the lumber frame 16, the hinge shaft 24, and the above-knee frame 26. The rear end of a bracket 30 is fixed to a lower portion of each of the above-knee frames 26, with the brackets 30 each having a length that is substantially along the front-rear direction.

Still further, the top end of a below-knee frame 34, serving as a leg portion, is coupled to the bottom end of each of the above-knee frames 26 via a hinge shaft 32 having an axial line running substantially along the left-right direction. The below-knee frames 34 have a length direction that is substantially along an up-down direction, and are coupled to the hinge shafts 32 so as to be capable of swinging. A second joint K2, corresponding to the knee joint, is configured by the above-knee frame 26, the hinge shaft 32, and the below-knee frame 34. An upper and lower pair of brackets 36, 37 is fixed to each upper portion of the below-knee frames 34, and the rear end of a bracket 35, having a length direction that runs substantially along the front-rear direction, is fixed to each lower portion of the below-knee frames 34.

A below-knee bearing 38 is attached to each of the below-knee frames 34, directly below the second joint K2. The below-knee bearings 38 are each formed with a semi-circular shape in plan view, with an opening that faces towards the front, and receive the rear side of a portion below the knee of a human body. As shown in FIG. 4, each of the below-knee bearings 38 can independently be put onto each of the below-knee portions of the different respective left and right legs, by means of leg belts 40, each having an intermediate portion that is fixed to the rear side of the below-knee bearing 38. Note that illustration of the leg belts 40 is omitted from drawings except for FIG. 4.

An ankle bearing 39 is attached to the bottom end of each of the below-knee frames 34. The ankle bearings 39 are each formed in a semi-circular shape in plan view, open towards the front, and receive the rear side of the ankle of a human body. As shown in FIG. 4, each of the ankle bearings 39 can independently be put onto the ankle portions on the different left and right legs with a leg belt 40 having an intermediate portion that is fixed to the rear side of the ankle bearing 39. Note that illustration of the leg belts 40 is omitted from drawings except for FIG. 4.

The walking unit 12 as explained above is configured to be put onto a human body, with the lumber frame 16 put onto the lumber portion of the lower trunk by the waist belt 18, the top end of each of the upright frames 20 put onto the chest portion of the upper trunk by the chest belt 23, and the below-knee bearings 38 put onto below-knee portions of the leg, and the ankle bearings 39 put onto the ankles, by means of the respective leg belts 40, such that exercise direction of the lower leg is mainly restricted to swing directions about each of the joints K1, K2.

The bogie 14 is equipped with a center frame 48 having a length direction that runs along the front-rear direction. A central portion of a front wheel frame 50, having a length that runs along the left-right direction, is coupled in a fixed manner to the front end of the center frame 48, and support shafts 52, aligned along the up-down direction, are connected to the both the left and right ends of the front wheel frame 50, respectively. Arms 54 are supported by each of the support shafts 52, respectively, so as to be capable of swinging about the support shafts 52, and the axial center of respective wheels 56 is rotatably supported at the bottom end of each of the arms 54.

An up-down direction intermediate portion of an upright pipe 58, having a length that runs along the up-down direction, is coupled in a fixed manner to the rear end of the center frame 48. A rear wheel frame 62, having a length direction that runs along the left-right direction, is coupled to the rear of the upright pipe 58 via a rear frame 60. The axial centers of wheels 56 are rotatably supported at the two length direction ends of the rear wheel frame 62. The bogie 14, and therefore the walking auxiliary equipment 10, is thereby such that contact is only made with the walking surface to be used at the front and rear, total four, wheels 56. Note that a suspension structure is employed in the rear frame 60 in order to absorb displacement in the up-down direction. Furthermore, in place of a configuration having four wheels 56, the bogie 14 can be configured equipped with two, three, five or more wheels 56.

The automatic lifting device 64 is provided to the bogie 14. The automatic lifting device 64 is provided with an upper block 66 that is fixed to the top end portion of the upright pipe 58, and with a lower block 68 that is fixed in the vicinity of the lower end of the upright pipe 58. The upper block 66 and the lower block 68 are fixed to the upright pipe 58, and therefore to the bogie 14, by main bodies 66A, 68A and gripping portions 66B, 68B, each with concave portions, that are fastened together, with the upright pipe 58 inserted into the concave portions in a gripped state. A left-right pair of connection plates 70, having length directions that run along the up-down direction, is connected to the main bodies 66A, 68A of the upper and lower blocks 68.

The automatic lifting device 64 is equipped with an air cylinder 72. The air cylinder 72 is configured with a piston 72B provided inside a cylinder 72A (see FIG. 6), with one end of an extension and retraction rod 72C positioned outside the cylinder 72A and the other end of the extension and retraction rod 72C fixed to the piston 72B. A structure is thereby achieved in which the extension and retraction rod 72C extends and retracts with respect to the cylinder 72A by the piston 72B sliding inside the cylinder 72A.

The air cylinder 72 has the bottom end portion of the cylinder 72A fixed to the upper block 66, with the extension and retraction rod 72C (the top end thereof) protruding out from the top end of the cylinder 72A so as to move up and down. A lifter 74 is fixed to the top end of the extension and retraction rod 72C. The lifter 74 has a main body 74A disposed in front of, and parallel to, the air cylinder 72, a top flange 74B, fixed to the top end of the extension and retraction rod 72C and extending rearward from the top end of the main body 74A, and a bottom flange 74C extending out forward from the bottom end of the main body 74A.

The top end of a guide rod 76 is fixed to the lifter 74 at the bottom flange 74C. The guide rod 76 is inserted into the upright pipe 58 of the bogie 14 and is supported such that only movement in the up-down direction is permitted. Due thereto, in the automatic lifting device 64, when the extension and retraction rod 72C of the air cylinder 72 extends with respect to the cylinder 72 the lifter 74 is raised from its initial position, while the guide rod 76 is being guided by the upright pipe 58 (by a linear guide disposed therein). In the initial position state of the lifter 74, when the air cylinder 72 is positioned with the shortest retraction, the bottom flange 74C is positioned at a position above, and in the vicinity of, the upper block 66. The maximum stroke of the air cylinder 72 is about 300mm.

As shown in FIG. 6, the automatic lifting device 64 is equipped with an air canister 78. The air canister 78 is in communication, via an electropneumatic regulator 80, with an air inlet-outlet aperture 72D disposed in the vicinity of the bottom end of the cylinder 72A. The electropneumatic regulator 80 is configured with a port that communicates the air inlet-outlet aperture 72D with the air canister 78, and with a port that communicates the air inlet-outlet aperture and the outside (with the atmosphere). Each of these ports is capable of being independently opened and closed, with each of the ports controlled by a control device 82, and opened or closed such that the internal pressure within the cylinder 72A, at the air inlet-outlet aperture 72D side of the piston 72B, is a set pressure.

The control device 82 is electrically connected to a raising and lowering switch 84. By operating the raising and lowering switch 84 to the raising side, the electropneumatic regulator 80 controls such that the air pressure of the cylinder 72A becomes a specific pressure, lifting the lifter 74 from the initial position by a specific amount. By operating the raising and lowering switch 84 to the lowering side, the electropneumatic regulator 80 controls such that the air pressure in the cylinder 72A is lowered to atmospheric pressure. Note that the control device 82 may be configured such that the set pressure is appropriately changed, for example if the walking auxiliary equipment 10 is jointly used by plural people or the like, in order to change the raising amount of the lifter 74 according to the body frame (height and weight) of the user.

The air canister 78, the electropneumatic regulator 80 and the control device 82 are installed at appropriate positions on the bogie 14. The air canister 78, the electropneumatic regulator 80 and the control device 82 configure a drive device in the present invention.
Note that a compressor, an air pump, or the like may be provided in place of an air canister.

The automatic lifting device 64 supports the above described walking unit 12 with respect to the bogie 14. Specifically, a left-right central portion (rear end portion) of the lumber frame 16, configuring the walking unit 12, is fixed to the bottom flange 74C of the lifter 74, configuring the automatic lifting device 64, by means of fasteners (not shown in the figures).

Thereby, the walking auxiliary equipment 10 is of a configuration in which upward movement of the lumber frame 16 of the walking unit 12 as shown in FIG. 4, and therefore upward movement of the lumber portion of a user, is obtained by raising the lifter 74 from the initial position. The initial position of the lifter 74 corresponds to the lumber portion of a user seated on a chair (not shown in the figures), and the raised position of the lifter 74 corresponds to the lumber portion of the user when standing.

Furthermore, as shown in FIG 7A, the walking auxiliary equipment 10 is equipped with a drive-assistance device 102 for imparting walking assistance force to a user.

The drive-assistance device 102 is equipped with: a first actuator 104 that assists flexion of the hip joint; a second actuator 106 that assists flexion of the knee joint; a third actuator 108 that assists extension of the knee joint; and a fourth actuator 110 that assists extension of the hip joint. As shown in FIG. 7A, a left-right pair are provided for each of the first to the fourth actuators 104, 106, 108, 110, corresponding to the left and right legs of a user, respectively. In the following explanation, when discrimination is made between the left and the right actuators, actuators on the right side will be appended with the suffix "A" and actuators on the left side will be appended with the suffix "B".

In the present exemplary embodiment, the first to the fourth actuators 104, 106, 108, 110 are so-called Mc Kibben artificial muscles, pneumatic actuators that contract when supplied with compressed air, generating force in the contracting direction. As shown in FIG. 8A and FIG. 8B, a pneumatic actuator AC is equipped with an inner tube IC that is a swelling and contracting body, and a mesh sleeve MS that is a covering body of a mesh shape that covers the inner tube IC. The mesh sleeve MS is, for example, configured from a fibrous material, such as, for example, a high strength non-elastic fiber or the like. The two end portion of the mesh sleeve MS in the length (axial) direction are connected to respective length direction end portions of the inner tube IC.

As shown in FIG. 8B, the inner tube IC swells by supplying air therein. Swelling of the inner tube IC is converted by the mesh sleeve MS into shrinkage in the overall length of the pneumatic actuator AC. Namely, when air is supplied into the pneumatic actuator AC, the length thereof shrinks as the diameter thereof expands. Force F is generated in the contracting direction of the pneumatic actuator AC due to this shrinkage in length.

As shown in FIG. 9, the first to the fourth actuators 104, 106, 108, 110 are connected, via switches SW, to a compressor CP. The switches SW are provided with an air supply switch (not shown in the figures) and an air vent switch (not shown in the figures). When the air supply switch is ON and the air vent switch is OFF, compressed air is supplied from the compressor CP to the first to the fourth actuators 104, 106, 108, 110. When the air vent switch is ON and the air supply switch is OFF, air in the first to the fourth actuators 104, 106, 108, 110 is vented. Switches SW are controlled by a control device 112 so as to match the walking movement of a person undergoing walking training. The control method thereof is described below.

As shown in FIG. 7A and FIG. 10A, the left and right first actuators 104 are provided extending in an up-down direction at the front side of the above-knee frames 26, with one end attached to the front end of the bracket 22, and the other end attached to the front end of the bracket 30. Contracting the first actuator 104 generates force that swings the above-knee frame 26 forwards about the first joint K1, namely generates force that flexes the first joint K1. As shown in FIG. 11A, the first actuators 104 are configured to generate force equivalent to the quadriceps muscle A of a human body. Note that, as shown in FIG. 7A, there are two each of the first actuators 104 provided on each of the left and right sides, since flexion of the first joint K1 requires a relatively high force.

Furthermore, as shown in FIG. 7A and FIG. 10A, the left and right second actuators 106 are provided extending in an up-down direction at the rear side of the above-knee frame 26, with one end attached to the rear end of the bracket 22, and the other end attached to the bracket 37. By contracting, the second actuators 106 generate force that swings the below-knee frame 34 rearward about the second joint K2, namely generate force that flexes the second joint K2. As shown in FIG. 11B, the second actuator 106 is configured to generate force equivalent to that of the triceps surae muscle B in the human body.

As shown in FIG. 7A and FIG. 10A, the left and right third actuators 108 are provided extending up and down at the front side of the below-knee frames 34, with one end of each attached to the front end of the bracket 30, and the other end attached to the front end of the bracket 35. By contracting, the third actuators 108 generate force to swing the below-knee frame 34 forward about the second joint K2, namely generate force extending the second joint K2 (see FIG 10B). As shown in FIG. 11A, the third actuators 108 are configured to generate force equivalent to the vastus muscles C in the human body.

Furthermore, as shown in FIG 7A and FIG 10A, the left and right fourth actuators 110 are provided extending in the up-down direction at the rear side of the above-knee frames 26, with one end attached to the bracket 17, and the other end attached to the bracket 36. By contracting in unison with the third actuators 108, the first actuators 104 generate force to swing the above-knee frame 26 rearward about the first joint K1, namely generate force to extend the first joint K1. As shown in FIG 11B, the fourth actuator 110 is configured to generate force equivalent to that of the gluteus maximus D in the human body.

Note that the configuration shown in FIG. 7B can also be employed as a configuration to attach the drive-assistance device 102 to the walking unit 12. The attachment configuration shown in FIG 7B is equipped with a bracket 140 in place of the bracket 22, and with a plate 150 in place of the bracket 25 and the bracket 30. Furthermore, attachment to each of the first actuator 104, the second actuator 106, the third actuator 108 and the fourth actuator 110 is attachment via a ring R. Furthermore, a step 160 is provided in place of the ankle bearing 39. Other parts of the configuration are similar to those of the attachment configuration described above. Explanation follows of the portions of the attachment configuration of the drive-assistance device 102 to the walking unit 12 that differ from the above described configuration.

Each of the brackets 140A, 140B is fixed to a bottom end portion of the upright frames 20 and projects out in a diagonal direction forwards and upwards from the two end portions of the lumber frame 16, respectively. Attachment holes 142H are configured in these projecting portions 142.

The plates 150A, 150B are long flat plate shapes, disposed along the above-knee frames 26 such that the faces of the plates substantially face the left and right directions.
The brackets 140A, 140B are attached at one end of the plates 150A, 150B (at the proximal end side) through an attachment plate 152, such that each of the brackets 140A, 140B is capable of swinging in the walking front-rear direction (the center of rotation in such cases is shown in the drawings as M). A portion at the distal end of each of the plates 150A, 150B is disposed further forward in the walking direction than the bottom end portion of the above-knee frame 26. Plural attachment holes 153, 154 are formed in the bottom end edge along the length direction of the plates 150A, 150B. The attachment holes 153 are configured in the proximal end side of the plates 150A, 150B, and the attachment holes 154 arc configured in the distal end side of the plates 150A, 150B.

Fixing portions 156 are formed at intermediate portions at the inside of the plates 150A, 150B. Intermediate portions of the above-knee frames 26 are fixed to the fixing portions 156. End portions at the lumber frame 16 side of the above-knee frame 26 are rotatably attached to the bracket 140.

One end of the first actuators 104 is attached to the attachment holes 142H of the brackets 140A, 140B via the rings R. The other end of the first actuators 104 is attached to the attachment holes 154 at the distal end side of the plates 150A, 150B via the rings R.

One end of the second actuator 106 is attached to the attachment holes 153 of the proximal end side of the plates 150A, 150B via the rings R. The other end of the second actuators 106 is attached to the bracket 37 via the rings R.

One end of the third actuators 108 is attached to the attachment holes 154 at the distal end side of the plates 150A, 150B via the rings R. The other end of the third actuators 108 is attached to the bracket 35 via the rings R.

One end of the fourth actuators 110 is attached to the bracket 17 via the rings R.
The other end of the fourth actuators 110 is attached to the bracket 37 via the rings R.

Regarding the functionality of the first actuators 104, the second actuators 106, the third actuators 108, and the fourth actuators 110, it is similar to that in the drive-assistance device 102.

The step 160 is of substantially an L-shape, and is attached to a lower end portion of the below-knee frame 34 via a hinge 162. One side of the step 160 is disposed so as to be parallel to the floor surface, and a shoe 164 is attached thereto.

Explanation follows of the operation of the present exemplary embodiment.

In the walking auxiliary equipment 10 of the above described configuration, the walking unit 12 is put onto a user who is in a seated posture on a chair (not shown in the figures). Specifically, the waist belt 18 is wrapped around below the buttocks such that the lumber frame 16 is put onto the lumber region, the chest belt 23 is wrapped around the chest region such that the left and right upright frames 20 are fixed to the chest region, the leg belts 40 are wrapped around and put onto a portion below the knee from the outside of the below-knee bearing 38, and the leg belts 40 are wrapped around and put onto the ankle portions from the outside of the ankle bearing 39.

The user who has put the walking unit 12 on operates the raising and lowering switch 84 to the raising side. When this occurs, the control device 82 controls the electropneumatic regulator 80, raising the internal pressure of the cylinder 72A of the air cylinder 72. Due thereto, in the walking auxiliary equipment 10, from the seated position, the extension and retraction rod 72C of the air cylinder 72 extends, the lifter 74 is gradually raised and the walking unit 12 attached to the bottom flange 74C of the lifter 74 makes the user who is wearing the walking unit 12 stand up from the seated state. The user is maintained in an upright position (standing state) since the electropneumatic regulator 80 holds a constant internal pressure in the cylinder 72A.

Next, an assistant pulls the chair away backwards. In this state, the user of the walking auxiliary equipment 10 performs walking exercise with a correct gait posture, while being restricted in action by the worn walking unit 12 of multi-jointed structure, and while being prevented from tipping over by the bogie 14 to which the walking unit 12 is attached.

When the user is performing walking exercise, ON and OFF control of the switch SW is controlled by the control device 112 shown in FIG 9, supplying air and venting air to the first to the fourth actuators 104, 106, 108, 110.

As shown in the timing chart of FIG. 13 and in FIG. 14, by sequentially supplying air and venting air to each of the left and right actuators, each of the left and right actuators are extended and retracted, imparting walking assistance force to a person undergoing walking training using the walking auxiliary equipment 10.

First, as shown in FIG. 15, air is supplied to the first actuator 104A and the second actuator 106A on the right leg side, and the third actuator 108B and the fourth actuator 110B on the left leg side, thereby contracting these actuators (step 1). The other actuators are in a non-air supplied state, namely in the extended venting operation state.

By contracting the first actuator 104A, force is generated to swing the above-knee frame 26 of the right leg side forwards about the first joint K1, namely force is generated equivalent to that of the quadriceps muscle A of the right leg of a user, and the action to raise the thigh of the right leg of a user (thigh raising action) is assisted.

Furthermore, by contracting the second actuator 106A, force is generated to swing the below-knee frame 34 of the right leg side rearwards about the second joint K1, namely force is generated equivalent to that of the triceps surae muscle B of the right leg of a user, and the action to flex the knee of the right leg of a user is assisted.

Namely, by contracting the first actuator 104A and the second actuator 106A, action to raise the right leg is assisted, while flexing the right knee of a user.

Furthermore, by contracting the third actuator 108B, force is generated to swing the below-knee frame 34 on the left leg side rearward about the second joint K2, namely force is generated equivalent to that of the vastus muscle C of a user, and action to extend the left leg of a user is assisted.

Furthermore, by contracting the fourth actuator 110B, force is generated to swing the above-knee frame 26 of the left leg side rearward about the first joint K1, namely force is generated equivalent to that of the gluteus maximus D of the left leg side of a user, and action to pull the left leg of a user rearward (kicking the ground surface) is assisted. When this occurs, due to the fourth actuator 110B contracting, the below-knee frame 34 rotates rearward about the second joint K2, and the reason that the second joint K2 does not extend is due to action of the opposing force due to contracting of the third actuator 108B.

Namely, due to the contracting of the third actuator 108B and the fourth actuator 110B, the action of a user to kick the ground with the left leg, with the knee in an extended state, is assisted, and due thereto a user can perform good stepping out forward with the right leg.

Next, as shown in FIG. 16, venting of air is performed for the first actuator 104A and the 106A of the right leg side and the fourth actuator 108B and the fourth actuator 110B of the left leg side, thereby extending these. Furthermore, accompanying this, air is supplied to the first actuator 104B and the second actuator 106B of the left leg side, and to the third actuator 108A and the fourth actuator 110A of the right leg side, contracting these (step 2).

Due to the extension of the first actuator 104A, generation of force to swing the above-knee frame 26 on the right leg side forwards about the first joint K1, namely generation of force equivalent to that of the quadriceps muscle A of the right leg of a user, is terminated, lowering the raised right leg thigh of the user.

Furthermore, by extension of the second actuator 106A, generation of force to swing the below-knee frame 34 of the right leg side rearward about the second joint K1, namely generation of force equivalent to that of the triceps surae muscle B of the right leg of a user, is terminated, releasing flexion of the right knee of a user.

When this occurs, due to contracting of the third actuator 108A proceeding contracting of the fourth actuator 108A, force is generated to swing the below-knee frame 34 of the right leg side forward about the first joint K1, namely force is generated equivalent to that of the vastus muscle C of the user, action to extend the right knee of the user is assisted.

Namely, by contracting the third actuator 108A to accompany the extension of the first actuator 104A and the second actuator 106A, a user can perform a good action to plant the right leg on the ground while extending the right knee, namely heal contact action.

Furthermore, by contracting the first actuator 104B and contracting the second actuator 106B, force is generated equivalent to that generated by the quadriceps muscle A and the triceps surae muscle B of the left leg side of the user, assisting action to raise the left leg while flexing the left knee.

Furthermore, by the fourth actuator 108A contracting together with the third actuator 108A contracting as described above, force is generated equivalent to that generated by the vastus muscle C and the gluteus maximus D of the right leg side of the user, assisting action to pull the right leg rearward with an extended state to the right knee of a user.

The first to the fourth actuators 104, 106, 108, 110 repeatedly perform the above operations when the user is performing walking exercise.

As shown in FIG. 17, in normal walking movement, heel contact A- foot-flat B - heel-off C -toe-off D is performed in sequence. Heel contact is the start of the chain of normal walking movement, however when heal contact cannot be made, then ground contact starts from the toes. In such cases, body weight cannot be supported by the whole of the sole of the foot, and excessive load acts on the toes, accompanied by hypertonicity promoting pes equinus. Furthermore, if the ground contact surface area is narrow (the support air surface is narrow) then maintaining overall balance of the body when standing becomes difficult, and substitutive action tension is induced, such as in the trunk, or the like. Therefore, it is important to perform walking movement in a chain starting from heel contact also from the perspective of securing support base surface area.

In the present exemplary embodiment, the third actuator 108 is provided to generate force assisting the action to straighten the knee of the user, required to enable a user to perform walking movement in a chain of actions starting from heel contact, and the third actuator 108 is actuated when the user is lowering a raised leg. Thereby, various problems resulting from toe-first ground contact can be solved.

In the present exemplary embodiment, since a suspension function is provided to the bogie 14, the load acting on the triceps surae muscles can be alleviated when the joint of the leg adopts a dorsiflexed position in the heel contact state. Due thereto, repetitive walking movement is enabled, without excessive load on the triceps surae muscles, and a gradual extension of the range of motion of the leg joints can be expected. Note that plasticity of the triceps surae muscle is promoted by repetition during walking movement of the plantarflexed position and the dorsiflexed position, and progress in that direction is also promoted.

Furthermore, in the present exemplary embodiment, an assistance force is also generated by the fourth actuator 110 when the third actuator 108 is in an assistance force generated state. Due to this assistance force, the above-knee frame 26 is swung rearwards about the first joint K, actuating pulling of the thigh towards the rear side without flexing the knee of a user, namely assisting action to kick the ground with an upright leg. Consequently, the walking stability of a user can be raised even further.

In the present exemplary embodiment, by making the extension and retraction length of the second actuator 106 longer than the extension and retraction of the fourth actuator 110, the range of motion in the knee flexing action of a user is extended.

Furthermore, in the present exemplary embodiment, by using, for the first to the fourth actuators 104, 106, 108, 110, pneumatic actuators that generate force in the contracting direction while contracting due to air supplied therein, functionality to generate the above described assistance force is obtainable with a simple structure.

Next, explanation follows regarding a walking auxiliary equipment 100 as a walking auxiliary equipment according to a second exemplary embodiment of the present invention. Note that whereas actuation of the first actuators 104 is automatic in the above described walking auxiliary equipment 10 according to the first exemplary embodiment, in the walking auxiliary equipment 100 according to the present exemplary embodiment the first to the fourth actuators 104, 106, 108, 110 are actuated by manual operation using a manual switch 120 shown in FIG. 18.

As shown in FIG. 18, the manual switch 120 is equipped with: a stand-up ON switch 122A generating assistance force when a user is standing up, and a stand-up OFF switch 122B that switches off generation of this assistance force; a right leg ON switch 124A that generates assistance force when a user is striding out with the right leg, and a right leg OFF switch 124B that switches off generation of this assistance force; and a left leg ON switch 126A that generates assistance force when a user is striding out with the left leg, and a left leg OFF switch 126B that switches off generation of this assistance force.

The stand-up ON switch 122A and the stand-up OFF switch 122B are connected to the left and right third actuator 108A and 108B, and to the left and right fourth actuator 110A and 110B. During periods when the stand-up ON switch 122A continues to be pressed, air continues to be supplied to the actuators to which it is connected, however when pressing is released, the supply of air to the actuators is terminated. The actuators to which supply of air is terminated remain in the state they were in at the time when supply was terminated.

During the period when the stand-up OFF switch 122B continues to be pressed, air continues to be vented from the actuators to which it is connected, however when pressing is released, venting of air from these actuators is terminated. The actuators to which venting of air is terminated remain in the state they were in at the time when venting was terminated.

The first actuator 104A and the second actuator 106A of the right leg side, and the third actuator 108B and the fourth actuator 110B of the left leg side, are connected to the right leg ON switch 124A and the right leg OFF switch 124B.

In addition, the first actuator 104B and the second actuator 106B of the left leg side, and the third actuator 108A and the fourth actuator 110A of the right leg side are connected to the left leg ON switch 126A and the left leg OFF switch 126B.

Note that while both the stand-up ON switch 122A and the stand-up OFF switch 122B are provided in the present exemplary embodiment, this is not always necessary. For example, as shown in FIG. 19 and FIG. 20, configuration may be made provided only with switches 124, 126 for raising and lowering the right leg and the left leg. In such cases, as shown in FIG. 19, configuration may be made in which the right leg or the left leg is raised by pressing, and the right leg or the left leg is lowered by releasing pressing, or, as shown in FIG. 20, configuration may be made in which a switch is provided for raising the right leg or the left leg and a switch is provided for lowering the right leg or the left leg, such that the legs can be raised and lowered by pressing each of the respective switches.

Explanation follows of operation of the present exemplary embodiment.

When a user is standing up (standing position), the stand-up ON switch 122 is pressed, contracting the third actuators 108A, 108B on the left and right sides, and fourth actuators 110A, 110B on the left and right sides. Due thereto, the below-knee frames 34 swing forward about the second joints K2, and the second joints K2 are extended, and in addition the left and right above-knee frames 26 swing rearward about the first joints K1, extending the first joints K1. Namely, force to assist standing-up action of a user is generated.

Then, at the point in time when the standing-up movement of a user is finished, pressing of the stand-up ON switch 122A is released, and the left and right third actuators 108A, 108B and the left and right fourth actuators 110A, 110B are maintained with the specific length of this contracted state. Maintaining the standing posture of a user is thereby assisted.

When the user performs walking movement, the right leg ON switch 124A is pressed so as to coincide with striding out forward with the right leg, contracting the first actuator 104A and the second actuator 106A of the right leg side, and contracting the third actuator 108B and the fourth actuator 110B of the left leg side. Due thereto, the above-knee frame 26 of the right leg side swings forward about the first joint K1, flexing the first joint K1, and also the below-knee frame 34 on the right leg side swings rearward about the second joint K2, flexing the second joint K2. However, the below-knee frame 34 on the left leg side swings forward about the second joint K2, extending the second joint K2, and also the above-knee frame 26 of the left leg side swings rearward about the first joint K1, extending the first joint K1.

Namely, the right leg is raised while the right knee of a user is flexed (right leg thigh raising), and force is generated assisting movement to pull the left leg rearward (kicking the ground surface with the left leg) in the state in which the left knee is extended.

Then, at the point in time after thigh raising of the right leg of a user is finished, when the right leg OFF switch 124B is pressed (in coordination therewith, pressing of the right leg ON switch 124A is released), the right leg of a user that has finished being raised is lowered.

When this occurs, the left leg ON switch 126A is pressed, the third actuator 108A of the right leg side is contracted, and action to extend the right knee of a user is assisted by the below-knee frame 34 on the right leg side swinging forward about the second joint K2, and heel contact of the right leg can be achieved.

Furthermore, by pressing the left leg ON switch 126A, the first actuator 104B and the second actuator 106B on the left leg side are contracted, the above-knee frame 26 on the left leg side swings forward about the first joint K1 together with the below-knee frame 34 on the left leg side swinging rearward about the second joint K2. Due thereto, the first joint K1 on the left leg side is flexed, and the second joint K2 on the left leg side is flexed.

Furthermore, the third actuator 108A and the fourth actuator 110A on the right leg side are contracted, and, with the second joint K2 in an extended state, the above-knee frame 26 swings rearward about the first joint K1 and the first joint K1 is extended.

Namely, the right leg of a user is raised (right leg thigh raising) with the right knee flexed, and force is generated to assist action to pull the left leg rearward (left leg ground kicking) with the left knee in an extended state.

Then, at a point in time after the thigh raising of the left leg of a user is finished, when the left leg OFF switch 126B is pressed (and in coordination therewith, pressing of the left leg ON switch 126A is released), the left leg of a user that has finished being raised is lowered.

When this occurs, in a similar manner to when lowering the right leg, the right leg ON switch 124A is pressed such that the left leg also makes heel contact.

By repeating the above operations, performing of good walking exercise, appropriate to the state of the user, is enabled for the user of the walking auxiliary equipment 100.

Here, sometimes involuntary muscle activity and excessive tone sometimes occurs together with assisting walking movement of a user with the walking auxiliary equipment 100. In the present exemplary embodiment, however, by operating the manual switch 120, the timing with which air is supplied to the first to the fourth actuators 104, 106, 108, 110, the flow rate thereof, and the like, are capable of being changed to match the condition of a user, and the shrinking (contracting) and relaxation (extension) of the first to the fourth actuators 104, 106, 108, 110 is capable of gradually being changed. Due thereto, a user is enabled to perform safe walking movement.

Furthermore, by manual (hand) operation of the walking auxiliary equipment 100, the capability arises to determine the level of muscle tone of a user and the presence or absence of involuntary movements, and a safe range of range of motion for the user can be verified. Consequently, the verified data is capable of serving a useful function when setting the control parameters in the automatic walking auxiliary equipment 10 explained in the first exemplary embodiment.

Furthermore, when pressing of the stand-up OFF switch 122B, the right leg OFF switch 124B, and the left leg OFF switch 126B continues, the first to the fourth actuators 104, 106, 108, 110 are relaxed, and a non-active state is adopted. Autonomous movement of a user can therefore be readily verified.

Furthermore, by gradually supplying air to the first to the fourth actuators 104, 106, 108, 110, it is possible to adjust the level of support present while verifying the autonomous movements of a user.

Furthermore, by pressing the stand-up ON switch 122A, the first joint K1 and the second joint K2 can be extended at the same time, not only resulting in being able assist maintenance of a standing posture of a user, but the weight of a user that acts on the flexed knees of a user can be suppressed by the below-knee bearing 38, resulting in being able to also obtain relieve of pain in the knee of a user.

Detailed explanation of particular exemplary embodiments of the present invention are given above, however the present invention is not limited by these exemplary embodiments, and it will be obvious to a person of ordinary skill in the art that various other exemplary embodiments are possible within the scope of the present invention. For example, pneumatic actuators are employed as the first to the fourth actuators in the present exemplary embodiment, however wire wound onto pulleys and wound out from pulleys, under actuation from a motor, may be employed in the first to the fourth actuators. It is also not essential for all of the first to the fourth actuators to be provided.

Furthermore, in the present exemplary embodiment, the walking auxiliary equipments 10, 100 included the bogie 14, however a bogie is not an essential element of the configuration of the walking auxiliary equipment.

## Claims

1. A walking auxiliary equipment that imprints walking patterns to nerve ganglions of a person with poor mobility, the walking auxiliary equipment comprising:
a walking aid unit that is put onto at least the leg of a person with poor mobility; and
an drive-assistance device, attached to the walking aid unit and assisting walking movement of the person with poor mobility.

2. The walking auxiliary equipment of claim 1, wherein the drive-assistance device is present outside a field of vision of a wearer.

3. The walking auxiliary equipment of claim 1 or claim 2, wherein the aid-assistance device imparts reaction force to a heel of the person with poor mobility when a wearer is progressing forward.

4. A walking auxiliary equipment comprising:
a trunk section that is put onto the trunk of a user;
a lower leg section that is put onto a lower leg of a user;
a coupling section, supported by the trunk section via a first joint section corresponding to a hip joint so as to be capable of swinging in a walking direction and a backwards direction, and supporting the lower leg section via a second joint section corresponding to a knee joint so as to be capable of swinging in a walking direction and backwards direction;
a first actuator that generates assistance force to cause the coupling section to swing towards the walking direction side about the first joint section;
a second actuator that generates assistance force to cause the lower leg section to swing towards the backwards direction about the second joint section; and
a third actuator that generates assistance force to cause the lower leg section to swing about the second joint section towards the walking direction side.

5. The walking auxiliary equipment of claim 4, wherein the third actuator is provided extending in an up-down direction at the walking direction side of the lower leg section, an upper end portion of the third actuator is supported at the coupling section, a lower end portion of the third actuator is supported at the lower leg section, and the third actuator generates force in a contracting direction while contracting.

6. The walking auxiliary equipment of claim 5 further comprising a coupling plate supported at the trunk section so as to be capable of swinging in the walking direction and the backwards direction, disposed along the coupling section with the coupling section fixed to an intermediate portion of the coupling plate, a lower end portion of the first actuator and an upper end portion of the third actuator supported at a distal end portion of the coupling plate, and an upper end portion of the second actuator supported at the proximal end of the coupling plate.

7. The walking auxiliary equipment of any one of claim 4 to claim 6, further comprising a fourth actuator that generates assistance force to cause the coupling section to swing towards the backwards direction about the first joint section in a state in which the third actuator has generated assistance force.

8. The walking auxiliary equipment of claim 7, wherein:
the first actuator is provided extending along an up-down direction at the walking direction side of the coupling section, an upper end portion of the first actuator is supported at the trunk section, a lower end portion of the first actuator is supported at the coupling section, and the first actuator generates force in a contracting direction while contracting; and
the second actuator and the fourth actuator are provided extending along up-down directions at the backwards direction side of the coupling section, upper end portions of the second actuator and the fourth actuator are supported at the trunk section, lower end portions of the second actuator and the fourth actuator are supported at the lower leg section and generate force toward a contracting direction while contracting.

9. The walking auxiliary equipment of claim 8, wherein the length of extension and retraction of the second actuator is longer than the length of extension and retraction of the fourth actuator.

10. The walking auxiliary equipment of any one of claim 7 to claim 9, wherein the first actuator, the second actuator, the third actuator, and the fourth actuator arc pneumatic actuators generating force in the contracting direction while contracting due to air being internally supplied.

11. The walking auxiliary equipment of claim 10, further comprising a manual switch to manually switch ON and OFF the contracting actuation of the first actuator, the second actuator, the third actuator, and the fourth actuator.

12. The walking auxiliary equipment of claim 11, wherein the manual switch comprises:
a first switch that switches ON and OFF contracting actuation in the first actuator and the second actuator on a first side of the left or the right, together with contracting actuation in the third actuator and the fourth actuator on the other side of the left and right; and
a second switch that switches ON and OFF contracting actuation together in the first actuator and the second actuator on the other side of the left or the right, together with contracting actuation in the third actuator and the fourth actuator on the first side.

13. The walking auxiliary equipment of claim 12, wherein the manual switch comprises a third switch that switches ON and OFF contracting actuation in the third actuator and the fourth actuator on both the left and right sides together.

14. The walking auxiliary equipment of claim 10, further comprising a control unit that repeatedly executes in sequence:
a first step of switching ON the contracting actuation of the first actuator and the second actuator on a first side of the left or the right and switching OFF the contracting actuation in the third actuator and the fourth actuator of the first side, together with switching OFF the contracting actuation of the first actuator and the second actuator on the other side of the left or the right and switching ON the contracting actuation in the third actuator and the fourth actuator of the other side; and
a second step of switching OFF the contracting actuation of the first actuator and the second actuator on the first side and switching ON the contracting actuation in the third actuator and the fourth actuator of the first side, together with switching ON the contracting actuation of the first actuator and the second actuator on the other side and switching OFF the contracting actuation in the third actuator and the fourth actuator of the other side.
